**Europäisches Patentamt**

**European Patent Office**

**Office européen des brevets**

(19)

(11) Veröffentlichungsnummer: **0 042 543**
**A1**

(12) # EUROPÄISCHE PATENTANMELDUNG

(21) Anmeldenummer: **81104477.5**

(22) Anmeldetag: **11.06.81**

(51) Int. Cl.³: **C 04 B 7/00**
**E 04 G 23/08**

(30) Priorität: **20.06.80 CH 4742/80**

(43) Veröffentlichungstag der Anmeldung:
**30.12.81 Patentblatt 81/52**

(84) Benannte Vertragsstaaten:
**AT BE CH DE FR GB IT LI LU NL SE**

(71) Anmelder: **Glob Ring AG**

**CH-6373 Ennetbürgen(CH)**

(72) Erfinder: **Schwarz, Günter**
**Fröschenwiese**
**CH-8321 Wildberg(CH)**

(74) Vertreter: **Troesch, Hans A., Dr.-Ing. et al,**
**Walchestrasse 19**
**CH-8035 Zürich(CH)**

(54) **Pulverisiertes Ziegelmaterial, dessen Verwendung und Verfahren zum Sprengen.**

(57) Pulverisiertes Ziegelmaterial, dessen Zusammensetzung in den Grenzen

| Gew. % | | | | | | | | |
|--------|-----|-----|-----|------|------|-----|----------------|--------|
| Si | Al | Fe | Ca | Mg | S | O | Glüh-verlust | Total |
| 2-9 | 2-0,3 | 1-0,2 | 50-65 | 0,3-0,5 | 2,5-0,1 | 25-40 | 1-2 | 99,5-99,9 |

variieren kann, wird, mit 20 - 50 Gew.% $H_2O$ gemischt, als Material zum Spalten, Abtrennen, Verformen oder Sprengen, insbesondere von Gesteinsmassen, benützt. Dazu wird das Material in mindestens eine Oeffnung des zu sprengenden Objektes eingebracht, wo, je nach Temperatur, die Wirkung nach 30 min bis 70 h erfolgt. Dieses Ziegelmaterial birgt die Möglichkeit in sich, eine Sprengwirkung in Zeitlupentempo zu erzeugen bzw. eine bleibende Ausdehnung zu erfahren, die auch bei Rückkehr zu Normalverhältnissen bestehen bleibt, im Gegensatz beispielsweise zur Temperaturbedingten Ausdehnung von Materialien, welche im allgemeinen eine reversible eindeutige Abhängigkeit von Ausdehnungs-Koeffizien und Temperatur aufweisen.

EP 0 042 543 A1

- 1 -

Pulverisiertes Ziegelmaterial, dessen Verwendung und
Verfahren zum Sprengen

Die vorliegende Erfindung betrifft ein pulverisiertes
Ziegelmaterial, dessen Verwendung sowie ein Verfahren
zum Sprengen.

Die heute bekannten Sprengstoffe wirken durch ihre sehr
hohen Drucke. Ihr Nachteil besteht darin, dass diese
Drucke in sehr kurzer Zeit erreicht werden und daher mit
dem Sprengen unangenehme Nebenerscheinungen auftreten,
insbesondere örtlich hohe Luftdruckänderungen, Knall und
dgl.

Die vorliegende Erfindung bezweckt die Schaffung eines
Materials, welches die Möglichkeit in sich birgt, entsprechend angewendet, eine Sprengwirkung in Zeitlupentempo zu erzeugen bzw. eine bleibende Ausdehnung zu erfahren, die auch bei Rückkehr zu Normalverhältnissen bestehen bleibt, im Gegensatz beispielsweise zur temperaturbedingten Ausdehnung von Materialien, welche im allgemeinen eine reversible eindeutige Abhängigkeit von Ausdehnungs-Koeffizienz und Temperatur aufweisen.

Ein derartiges pulverisiertes Ziegelmaterial, welches
diesen Anforderungen genügt, zeichnet sich aus durch die
Zusammensetzung, wie sie im Anspruch 1 aufgeführt ist.

5. Juni 1981/Ro

Erfindungsgemäss kann ein derartiges Ziegelmaterial als Sprengstoff verwendet werden, der die unangenehmen Eigenschaften der plötzlichen Druckerhöhung und des Knalles nicht aufweist, sondern bei welchem erfindungsgemäss durch Zugabe von zwischen 20 und 50 Gew.% Wasser zum Ziegelmaterial und deren Mischen sowie Einfüllen in mindestens eine Oeffnung des zu sprengenden Objektes ein langsames, je nach Umgebungstemperatur oder Abfülltemperatur, innerhalb von 30 min bis ca. 70 h die Spreng- und Zerstörungswirkung eintritt.

Es entstehen dabei Expansionsdrucke von über 3'000 t/m$^2$.

Versuche haben gezeigt, dass es vorteilhaft ist, das Ziegelmaterial in folgender Zusammensetzung zu wählen:

| Gew.% | | | | | | | | |
|------|------|------|------|------|------|------|------------------|-------|
| Si   | Al   | Fe   | Ca   | Mg   | S    | O    | Glüh-<br>verlust | Total |
| 4,0  | 1,2  | 0,7  | 58,6 | 0,4  | 1,6  | 32,0 | 1,2              | 99,7  |
| 6,3  | 0,6  | 0,3  | 58,5 | 0,4  | 0,3  | 31,9 | 1,5              | 99,8  |

Eine andere Möglichkeit besteht darin, Ziegelmaterial wie folgt zusammenzusetzen:

| Gew.% | | | | | | | | |
|------|------|------|------|------|------|------|------------------|-------|
| Si   | Al   | Fe   | Ca   | Mg   | S    | O    | Glüh-<br>verlust | Total |
| 4,0  | 1,2  | 0,7  | 58,6 | 0,4  | 1,6  | 32,0 | 1,2              | 99,7  |

Ebenfalls bewährt hat sich ein Ziegelmaterial der folgenden Zusammensetzung:

| Gew.% | | | | | | | | |
|---|---|---|---|---|---|---|---|---|
| Si | Al | Fe | Ca | Mg | S | O | Glüh-verlust | Total |
| 6,3 | 0,6 | 0,3 | 58,5 | 0,4 | 0,3 | 31,9 | 1,5 | 99,8 |

Die Wasserbeigabe kann zwischen 25 und 40 Gew.% speziell vorteilhaft sein und entsprechende Expansionsdrucke hervorbringen. Unter "Sprengen" im erläuterten Sinn wird auch ein Abtrennen, Spalten, Zerreissen, Verformen, Abpressen, Zerstören, Lockern und dgl. verstanden.

Patentansprüche:

1. Pulversisiertes Ziegelmaterial, gekennzeichnet durch dessen Zusammensetzung in den Grenzen

| Gew.% | | | | | | | | |
|---|---|---|---|---|---|---|---|---|
| Si | Al | Fe | Ca | Mg | S | O | Glüh-verlust | Total |
| 2-9 | 2-0,3 | 1-0,2 | 50-65 | 0,3-0,5 | 2,5-0,1 | 25-40 | 1-2 | 99,5-99,9 |

2. Ziegelmaterial nach Anspruch 1, gekennzeichnet durch dessen Zusammensetzung in den Grenzen

| Gew.% | | | | | | | | |
|---|---|---|---|---|---|---|---|---|
| Si | Al | Fe | Ca | Mg | S | O | Glüh-verlust | Total |
| 4,0 | 1,2 | 0,7 | 58,6 | 0,4 | 1,6 | 32,0 | 1,2 | 99,7 |
| 6,3 | 0,6 | 0,3 | 58,5 | 0,4 | 0,3 | 31,9 | 1,5 | 99,8 |

3. Ziegelmaterial nach Anspruch 2, gekennzeichnet durch dessen Zusammensetzung in den Grenzen

| Gew.% | | | | | | | | |
|---|---|---|---|---|---|---|---|---|
| Si | Al | Fe | Ca | Mg | S | O | Glüh-verlust | Total |
| 4,0 | 1,2 | 0,7 | 58,6 | 0,4 | 1,6 | 32,0 | 1,2 | 99,7 |

4. Ziegelmaterial nach Anspruch 2, gekennzeichnet durch dessen Zusammensetzung in den Grenzen

| Gew.% | | | | | | | | |
|---|---|---|---|---|---|---|---|---|
| Si | Al | Fe | Ca | Mg | S | O | Glüh-verlust | Total |
| 6,3 | 0,6 | 0,3 | 58,5 | 0,4 | 0,3 | 31,9 | 1,5 | 99,8 |

5. Verwendung des pulverisierten Ziegelmaterials nach einem der Ansprüche 1 - 4 als Sprengstoff.

6. Verfahren zum Sprengen, unter Verwendung des pulverisierten Ziegelmaterials nach einem der Ansprüche 1 - 4, dadurch gekennzeichnet, dass man das Ziegelmaterial mit 20 - 50 Gew.% $H_2O$ mischt und in mindestens eine Oeffnung des zu sprengenden Objektes einbringt.

7. Verfahren zum Sprengen, unter Verwendung des pulverisierten Ziegelmaterials nach Anspruch 6, dadurch gekennzeichnet, dass man das Ziegelmaterial mit 25 - 40 Gew.% $H_2O$ mischt und in mindestens eine Oeffnung des zu sprengenden Objektes einbringt.

**Europäisches Patentamt**

# EUROPÄISCHER RECHERCHENBERICHT

Nummer der Anmeldung

EP 81 10 4477

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| XE P | EP - A - 0 017 398 (ONODA CEMENT) <br> * Zusammenfassung; Beispiel 1 * | 1-7 |
| XE | GB - A - 2 067 176 (SUMITOMO CE-MENT) <br> * Zusammenfassung * | 1,5-7 |
| X | DE - A - 1 948 565 (GIKEN KOGYO K.K.) <br> * Anspruch 1 * | 5-7 |
| | DE - A - 2 626 126 (GENERAL PORT-LAND) <br> * Seite 43, Zusammensetzung Nr. 9 * | 1 |
| A | US - A - 3 801 345 (K. NAKAGAWA) | |
| A | US - A - 2 154 355 (J.J. RAWLINGS) | |

**KLASSIFIKATION DER ANMELDUNG (Int. Cl.³)**

C 04 B 7/00
E 04 G 23/08

**RECHERCHIERTE SACHGEBIETE (Int. Cl.³)**

C 04 B 7/00
13/00
41/00
C 06 B
E 04 G 23/00
C 09 K 3/00
F 42 D 7/00
E 21 B 43/00
E 21 C 41/00
B 28 D 1/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-09-1981 | DAELEMAN |

EPA form 1503.1 06.78